# FASCICULE DE BREVET EUROPEEN

(11) **EP 0 615 608 B1**
(45) Date de publication et mention de la délivrance du brevet: **12.07.1995**
(21) Numéro de dépôt: 93901044.3
(22) Date de dépôt: 02.12.1992
(51) Int. Cl.: G01B 11/16, G01L 5/04, G01D 5/34, B21B 37/00

(54) **Rouleau mesureur de planéité d'une bande fabriquée en continu**
Messroller zur Planleitsmessung eines fortlaufend produzierten Bandes
Roller for measuring the surface flatness of a strip produced in a continuous process

(30) Priorité: 02.12.1991 FR 9114912
(43) Date de publication de la demande: 21.09.1994
(73) Titulaire: SOLLAC, 92800 Puteaux (FR)
(72) Inventeur: JEUNIAUX, François, F-54560 Sancy (FR); MINEAU, Jean-Luc, F-57000 Metz (FR)
(74) Mandataire: Bouget, Lucien
(86) Numéro de dépôt international: FR9201128
(87) Numéro de publication internationale: WO9311404

(56) Documents cités:
- EP-A- 0 349 196
- GB-A- 1 544 483
- GB-A- 2 055 215
- US-A- 4 428 244
- US-A- 4 445 349

## Description

L'invention concerne les rouleaux mesureurs de planéité d'une bande produite en continu, par exemple une bande en acier.

Dans les lignes de fabrication en continu de bandes il est nécessaire de pouvoir contrôler la planéité en continu. C'est par exemple le cas sur les laminoirs à froid de bandes en acier.

Les défauts de planéité résultent souvent de différences de longueur entre les fibres axiales et les fibres latérales, qui conduisent soit à des ondulations des rives soit à des poches dans l'axe.

Pour détecter et mesurer ces défauts on soumet la bande à une tension en la faisant s'appuyer sur un rouleau déflecteur et on mesure la pression de la bande sur le rouleau, dans l'axe de la bande et en rives. En effet, les fibres courtes et les fibres longues ne subissent pas la même tension et de ce fait n'exercent pas la même pression sur le rouleau.

Pour effectuer ce contrôle de planéité il existe des rouleaux mesureurs de planéité comprenant une frette, une table, des tourillons, la table étant munie de capteurs de pression du type piézoélectrique ou inductif. Ils sont montés rotatifs autour de leur axe. C'est le cas notamment du rouleau mesureur de planéité décrit dans le document US-A-4.428.244. Mais ces rouleaux ont plusieurs inconvénients :
- ils sont mécaniquement très complexes et très lourds, ce qui nécessite une infrastructure importante pour les mettre en place ; il faut en particulier un moteur,
- ils sont très coûteux,
- les capteurs piézoélectriques ou inductifs sont relativement volumineux, ce qui ne permet pas d'en placer beaucoup le long d'une génératrice d'un rouleau et cela réduit la résolution en largeur,
- la génération et la transmission de la mesure sont complexes,
- la mesure dépend de la rigidité et de l'épaisseur de la bande contrôlée.

Le but de la présente invention est de proposer un rouleau mesureur de planéité qui soit mécaniquement simple, qui soit léger et n'ait pas besoin d'être motorisé, qui ait une bonne résolution en largeur, pour lequel la génération et la transmission de la mesure soient simples et qui soit tel que la mesure soit indépendante de la rigidité ou de l'épaisseur de la bande.

A cet effet, l'invention a pour objet un rouleau mesureur de planéité d'une bande produite en continu, par exemple une bande en acier, du type comprenant une table cylindrique creuse, une frette et deux tourillons comprenant en outre un dispositif mesureur de force à fibres optiques, utilisant la biréfringence apparaissant dans une fibre optique monomode soumise à une force latérale, la ou les fibres optiques du dispositif mesureur de force formant au moins un enroulement d'au moins une spire autour de la table du cylindre placé au contact de la frette, de manière à être soumis à la contrainte mécanique générée par la pression de la bande sur la frette.

Le dispositif de mesure de force à fibre optique comprend une alimentation électrique stabilisée, une source lumineuse monochromatique, un polariseur et au moins une fibre optique monomode, un analyseur polarimétrique, un photodétecteur et un dispositif électronique suiveur de phases disposés à l'intérieur de la table cylindrique.

De préférence, le dispositif mesureur de force équipant le rouleau comprend une pluralité de fibres optiques montées en parallèle et formant autour de la table cylindrique des enroulements espacés d'au moins une spire et répartis sur la largeur de la table.

De préférence la source lumineuse est une source laser.

Les dispositifs électroniques suiveurs de phase sont connectés à un multiplexeur placé à l'intérieur de la table cylindrique.

Le multiplexeur alimente une photodiode placée dans l'axe du rouleau à proximité de l'extrémité externe d'un tourillon.

Le rouleau comporte éventuellement au moins un coupleur auquel sont connectés une pluralité de fibres optiques.

Il comporte un dispositif d'alimentation électrique stabilisée connecté d'une part à des bagues conductrices placées sur un des tourillons et d'autre part à la ou les sources lumineuses.

De préférence la frette est en matière synthétique, par exemple en résine.

Un tel rouleau est léger, n'a pas besoin d'être motorisé, a une bonne résolution en largeur et n'est pas sensible à l'épaisseur ou à la rigidité de la bande. De plus, il est économique.

Avantageusement, afin de pouvoir corriger les mesures de forces des éventuels effets de température variables selon la largeur de la bande laminée, le rouleau selon l'invention incorpore au voisinage des enroulements de fibre optique du mesureur de force, un enroulement secondaire d'au moins une spire constituée également par une fibre optique utilisant la biréfringence apparaissant lorsqu'elle est soumise à une variation de température, ledit enroulement secondaire étant disposé de façon à ne pas être soumis aux contraintes mécaniques générées par la pression de la bande sur la frette.

L'invention va maintenant être décrite plus en détail en regard des planches de dessins annexées sur lesquelles :
- la figure 1 est un schéma de principe d'un capteur de force à fibre optique,
- la figure 2 est une vue en perspective d'un rouleau selon l'invention avec arrachement partiel de la frette,
- la figure 3 est un schéma de montage de trois fibres en parallèle alimentées par une seule source lumineuse.
- La figure 4 est une vue schématique partielle en coupe longitudinale suivant l'axe du rouleau d'une forme de réalisation avantageuse de l'invention assurant une correction de température.

Le principe de la mesure de force par fibre optique est connu par exemple par le document GB-A-1.544.483 mais on le décrira pour plus de clarté dans l'exposé.

Lorsqu'une fibre optique monomode est soumise à une force latérale, il apparaît une biréfringence. De cette biréfringence, il résulte que les ondes lumineuses polarisées parallèlement à l'axe de la force ne se propagent pas à la même vitesse que les ondes polarisées perpendiculairement à l'axe de la force.

Si, dans une fibre optique monomode soumise à une force latérale on introduit une onde polarisée à 45° par rapport à l'axe de la force, l'onde se décompose en deux ondes polarisées linéairement respectivement parallèlement à la direction de la force et perpendiculairement à cette même direction. Ces deux ondes se propagent dans la fibre avec des vitesses différentes. Si en sortie de la fibre, à l'aide d'un analyseur polarimétrique, on superpose les deux ondes, on observe une interférence.

Si on fait varier la force, on voit apparaître une succession de franges d'interférence. En comptant les franges d'interférence, on peut suivre l'évolution de la force et déterminer sa valeur.

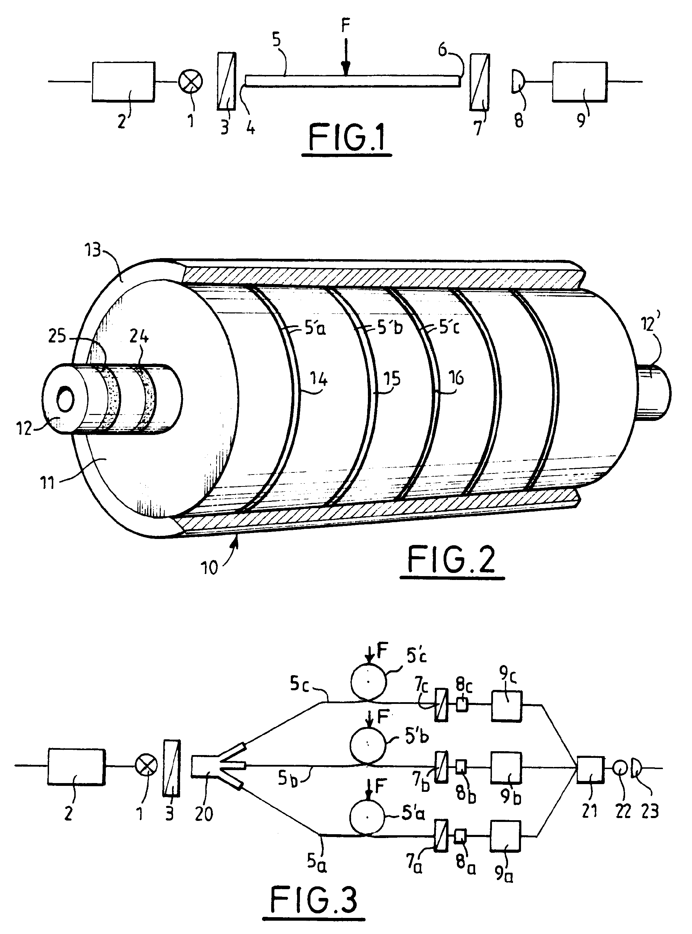

Pour mettre en oeuvre ce procédé on utilise un dispositif dont le principe est représenté à la figure 1. Ce dispositif comporte une source monochromatique 1 alimentée par une alimentation stabilisée 2.

La source lumineuse 1 éclaire un polariseur 3 orienté convenablement. Derrière le polariseur 3 se trouve l'extrémité 4 d'une fibre optique monomode 5 soumise à une force latérale F. La deuxième extrémité 6 de la fibre optique 5 se trouve face à un analyseur polarimétrique 7 derrière lequel se trouve une photodiode 8. La photodiode 8 est branchée sur un dispositif électronique suiveur de phase 9. Le dispositif électronique suiveur de phase analyse les signaux d'interférence et compte le nombre de franges d'interférence ainsi que leur sens de défilement.

L'invention consiste à implanter de tels dispositifs mesureurs de force dans un rouleau qui pourra être utilisé pour mesurer la planéité d'une bande en défilement.

Un tel rouleau mesureur de planéité repéré généralement par 10 à la figure 2 comporte une table cylindrique creuse 11, des tourillons creux 12, 12′ et une frette 13. Sur la table cylindrique 11 sont enroulés une pluralité de fibres optiques 5a, 5b, 5c formant une ou plusieurs boucles 5′a, 5′b, 5′c constituant des enroulements 14, 15, 16 espacés, répartis selon la largeur de la table 11. Chaque fibre optique fait au moins une spire et peut faire plusieurs spires jointives. Les extrémités de chaque fibre optique pénètrent à l'intérieur de la table cylindrique dans laquelle sont placés une alimentation, une ou plusieurs sources lumineuses, des polariseurs, des analyseurs polarimétriques, des photodétecteurs, des dispositifs électroniques suiveurs de phase.

Chaque fibre optique est intégrée à un circuit optique comprenant une source lumineuse laser et un polariseur à une extrémité de la fibre, un analyseur polarimétrique, un photodétecteur et un dispositif électronique suiveur de phase à l'autre extrémité de la fibre.

Les dispositifs électroniques suiveurs de phase connus en eux-mêmes sont reliés à un multiplexeur 21. Le multiplexeur est placé à l'intérieur du rouleau. Il est relié à une diode électroluminescente 22 placée dans l'axe d'un tourillon creux à proximité de l'extrémité externe du tourillon. A l'extérieur du rouleau, un photodétecteur 23 est placé dans le prolongement de l'axe du rouleau, en regard de la diode électroluminescente 22. Le photodétecteur 23 est relié à un dispositif électronique de traitement du signal et de calcul non représenté.

Dans le cas où il n'y a qu'une fibre optique la diode électroluminescente est directement reliée au dispositif suiveur de phase.

L'alimentation stabilisée 2 est reliée à deux bagues conductrices 24 et 25 situées à la périphérie d'un tourillon 12. Plusieurs fibres optiques peuvent être alimentées en lumière par une seule source lumineuse 1 comme représenté à la figure 3. Dans ce cas, derrière le polariseur 3 on implante un coupleur 20 qui divise le faisceau lumineux issu de la source 1 et polarisé par le polariseur 3 en autant de faisceaux polarisés qu'il y a de fibres. Le coupleur 20 doit être à conservation de polarisation. Dans le cas de la figure 3, le coupleur 20 alimente trois fibres 5a, 5b, 5c qui servent de détecteurs et qui forment chacune une ou plusieurs boucles 5′a, 5′b ou 5′c autour de la table d'un cylindre, sur laquelle s'exerce une force transversale F. Il est possible également de placer trois polariseurs après le coupleur 20.

Chaque fibre est munie d'un analyseur polarimétrique 7a, 7b, 7c, d'un photodétecteur 8a, 8b, 8c qui alimente un dispositif suiveur de phase 9a, 9b, 9c ; les différents dispositifs suiveurs de phase sont connectés à un multiplexeur 21. On notera que toutes les fonctions polarimétriques peuvent être réalisées avec des fibres optiques adaptées.

Les enroulements 14, 15, 16 sont disposées sur le rouleau de façon que les fibres optiques aient une bonne résolution latérale. Pour celà les fibres peuvent être placées relativement proches les unes des autres en particulier dans les zones situées près des extrémités du rouleau.

Pour protéger les fibres optiques de l'agression que provoquerait le contact avec la bande, la table du rouleau est enrobée de résine. Cet enrobage forme une frette 13.

Le fonctionnement va maintenant être décrit. Par les bagues 24 et 25 l'alimentation stabilisée 2 est alimentée en courant électrique ; elle délivre un courant stabilisé qui alimente la source lumineuse monochromatique 1. La source lumineuse 1 émet un rayon lumineux qui est polarisé en traversant le polariseur 1. Le rayon lumineux polarisé est divisé par le coupleur 20 en autant de rayons lumineux qu'il y a de fibres branchées sur le coupleur. Chaque fibre optique 5a, 5b, 5c reçoit un faisceau lumineux qui est affecté par la force F à laquelle est soumise la fibre optique. Le faisceau lumineux de chaque fibre optique est analysé par l'analyseur polarimétrique 7a, 7b, 7c associé à chaque fibre optique et chaque signal lumineux émis par chaque analyseur polarimétrique est détecté par les photodétecteurs 8a, 8b, 8c qui transforment les signaux lumineux en signaux électriques. Chaque signal électrique est traité par les dispositifs suiveurs de phase 9a, 9b, 9c associés. Ces dispositifs suiveurs de phase envoient un signal au multiplexeur 21 qui alimente la diode électroluminescente 22. Celle-ci envoie un signal lumineux à l'extérieur du rouleau. Ce signal est détecté par la photodiode 23 située à l'extérieur du rouleau. La photodiode 23 transmet le signal au dispositif électronique de traitement et de calcul. On peut ainsi connaître la force F qui s'exerce sur chacune des fibres.

Il est à remarquer que toutes les fibres optiques du rouleau ne sont pas nécessairement alimentées en lumière par la même source lumineuse, il peut y avoir plusieurs sources lumineuses. Par contre tous les dispositifs suiveurs de phase sont connectés à un seul multiplexeur. Il y a en effet une seule sortie de signal vers l'extérieur du rouleau.

La sortie du signal par l'intermédiaire de la diode électroluminescente 22 et du photodétecteur 23 a l'avantage d'être beaucoup plus fiable que les sorties par l'intermédiaire de bagues conductrices.

Enfin, sur une ligne de fabrication le rouleau est monté rotatif autour de son axe qui est parallèle à la surface de la bande. Il est monté de façon à ce qu'il réalise une certaine déflexion de la bande pour que celle-ci exerce une force sur le rouleau.

On remarquera qu'un tel rouleau est insensible à la rigidité ou à l'épaisseur de la bande. En effet, la force mesurée est indépendante de l'angle d'enroulement de la bande sur le rouleau ce qui n'est pas le cas des rouleaux selon l'art antérieur, et l'angle d'enroulement dépend de la rigidité et de l'épaisseur de la bande.

Les fibres optiques monomode utilisées dans la constitution du dispositif mesureur de force qui vient d'être décrit, sont sensibles de la même façon à la chaleur.

Ainsi, si la température de la bande n'est pas uniforme transversalement (par exemple des bords moins chauds que la partie médiane) les signaux délivrés par les différentes fibres optiques seront affectées par les différences de température et ne seront donc pas parfaitement représentatifs des défauts de planéité réels quand la bande sera à une température homogène ambiante.

Pour remédier à cet éventuel inconvénient, on pourra avantageusement disposer au voisinage de chaque enroulement de fibre optique du mesureur de force, un enroulement secondaire de même nature, c'est-à-dire un capteur de température constitué d'une fibre optique monomode qui utilise la biréfringence selon deux directions à 90° apparaissant sous l'effet d'une variation de température, cet enroulement étant disposé de manière à ce que la fibre qui le constitue ne soit pas soumise à la contrainte mécanique provoquée par la pression de la bande laminée sur la frette du rouleau.

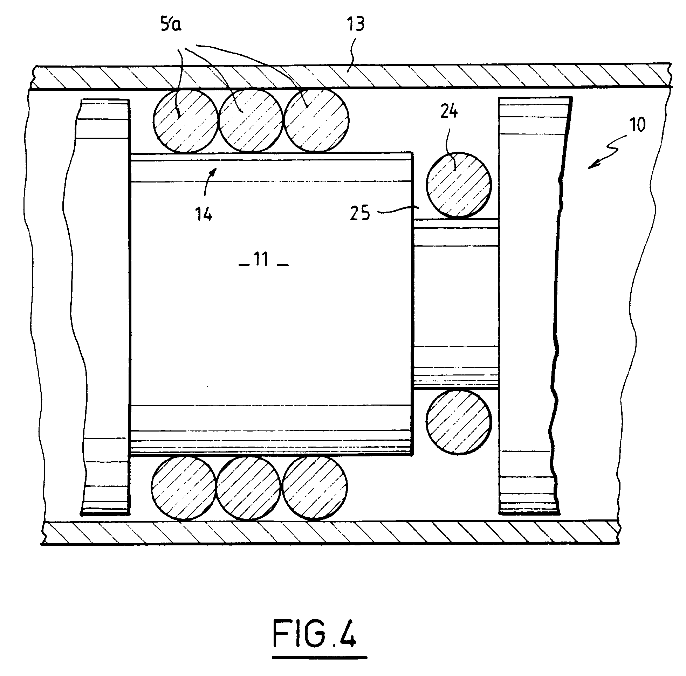

Comme le montre la figure 4, sur laquelle seule la portion du rouleau 10 contenant l'enroulement 14 a été représentée, pour ne pas surcharger inutilement la figure, cette réalisation particulière de l'invention peut être effectuée en logeant la fibre optique devant former l'enroulement secondaire 24 capteur de température dans une cannelure 25 ménagée par usinage sur la table 11 plus profondément que le logement réservé à l'enroulement principal 14. La profondeur d'usinage est déterminée comme on l'aura compris de manière que la fibre optique constitutive de l'enroulement secondaire 24, compte tenu de son diamètre, ne soit pas mise au contact de la frette 13.

La mesure de température, à l'aide d'une fibre optique telle que 24, sensible à la température mais non sensible à la contrainte, peut se faire par une technique interféro-polarimétrique, comme pour le dispositif capteur de force qui a été précédemment décrit.

Cette méthode revient à installer un réseau de capteurs de température à fibre optique monomode telle que 24, en parallèle au réseau de capteurs de force 14, 15, 16... répartis le long du rouleau 10. Ces capteurs de température 24 ..., associés chacun à un capteur de force voisin, sont inclus dans un montage optique identique à celui dans lequel sont montées les fibres optiques 5a, 5b, 5c ... de mesure de force, à savoir une source lumineuse monochromatique, par exemple un laser, un polariseur, et au moins une fibre optique monomode sensible à la température, un analyseur polarimétrique, un photodétecteur et un dispositif électronique suiveur de phase.

Ces fibres optiques 24 ainsi disposées délivrent un signal représentatif de la température locale. Ce signal est utilisé pour corriger le signal de la fibre optique voisine captant la force et obtenir ainsi des valeurs de contraintes non perturbées par les gradients de température que peut présenter la bande laminée dans sa largeur. En outre, grâce à un calculateur central il est aisé à partir de chaque couple de valeurs force-tempéraure, de déterminer le profil de planéité que présentera la bande une fois qu'elle aura atteint la température ambiante de 20°C.

## Revendications

1. Rouleau mesureur de planéité d'une bande produite en continu, par exemple une bande en acier, monté rotatif autour de son axe et du type comprenant une table cylindrique creuse (11), une frette (13) et deux tourillons creux (12, 12′), caractérisé en ce qu'il comprend un dispositif mesureur de force à fibres optiques utilisant la biréfringence apparaissant dans une fibre optique monomode soumise à une force latérale, la ou les fibres optiques (5a) du dispositif mesureur de force formant au moins un enroulement (14) d'au moins une spire (5′a) autour de la table cylindrique (11) placé au contact de la frette (13) de manière à être soumis à la contrainte mécanique générée par la pression de la bande sur la frette (13).

2. Rouleau selon la revendication 1, caractérisé en ce que le dispositif de mesure de force à fibre optique comprend une alimentation électrique stabilisée (2), une source lumineuse monochromatique (1), un polariseur (3) et au moins une fibre optique monomode (5), un analyseur polarimétrique (7), un photodétecteur (8) et un dispositif électronique suiveur de phase (9) disposés à l'intérieur de la table cylindrique (11).

3. Rouleau selon l'une quelconque des revendications 1 et 2, caractérisé en ce que le dispositif mesureur de force dont il est équipé comprend une pluralité de fibres optiques (5a, 5b, 5c) montées en parallèle et formant autour de la table cylindrique (11) des enroulements espacés (14, 15, 16 ...) d'au moins une spire (5′a, 5′b, 5′c) et répartis sur la largeur de la table (11).

4. Rouleau selon la revendication 2, caractérisé en ce que la source lumineuse (1) est une source laser.

5. Rouleau selon l'une quelconque des revendications 2, 3 ou 4, caractérisé en ce qu'il comporte en outre un multiplexeur (21) placé à l'intérieur de la table cylindrique (11) et auquel sont connectés les dispositifs suiveurs de phase (9a, 9b, 9c).

6. Rouleau selon l'une quelconque des revendications 2 à 5, caractérisé en ce qu'il comporte une photodiode (22) placée dans l'axe du rouleau à proximité de l'extrémité externe d'un tourillon (12, 12′).

7. Rouleau selon l'une quelconque des revendications 2 à 6, caractérisé en ce qu'il comporte au moins un coupleur optique (20) auquel sont connectés une pluralité de fibres optiques (5a, 5b, 5c).

8. Rouleau selon l'une quelconque des revendications 2 à 7, caractérisé en ce que l'un des tourillons (12) comporte des bagues conductrices (24, 25) reliées à l'alimentation électrique stabilisée (2).

9. Rouleau selon l'une quelconque des revendications 1 à 8 caractérisé en ce que la frette (13) est en matériau synthétique par exemple en résine.

10. Rouleau selon l'une quelconque des revendications 1 et 3 caractérisé en ce qu'il comporte au voisinage des enroulements (14) de fibre optique (5a) de mesure de force, des enroulements secondaires (24) de fibre optique sensible à la température et disposés de façon à ne pas être soumis aux contraintes mécaniques provoquées par la pression de la bande sur la frette (13).

11. Rouleau selon la revendication 10, caractérisé en ce que lesdits enroulements secondaires (24) sont logés dans des cannelures usinées sur la table cylindrique (11) au voisinage immédiat des emplacements des enroulements principaux (14).

## Patentansprüche

1. Meßroller zur Planheitsmessung eines fortlaufend produzierten Bandes, beispielsweise eines Stahlbandes, der um seine Achse drehbar gehalten ist und ein hohlzylindrisches Bett (11), einen Mantelring (13) und zwei hohle Lagerzapfen (12, 12′) aufweist, dadurch gekennzeichnet, daß er eine faseroptische Kraftmeßeinrichtung aufweist, die die Doppelbrechung ausnutzt, die in einer optischen Einmodenfaser auftritt, die einer Querkraft ausgesetzt wird, wobei die optische Faser (5a) oder die optischen Fasern der Kraftmeßeinrichtung wenigstens eine Wicklung (14) mit wenigstens einer Windung (5′a) um das zylindrische Bett (11) herum bilden, die mit dem Mantelring (13) derart in Berührung steht, daß sie der durch den Druck des Bandes auf den Mantelring (13) erzeugten mechanischen Spannung ausgesetzt ist.

2. Meßroller nach Anspruch 1, dadurch gekennzeichnet. daß die faseroptische Kraftmeßeinrichtung eine stabilisierte elektrische Spannquelle (2), eine monochromatische Lichtquelle (1), einen Polarisator (3) und wenigstens eine optische Einmodenfaser (5), einen polarimetrischen Analysator (4), einen Fotodetektor (8) und eine elektronische Phasenfolgereinrichtung (9) aufweist, die im Inneren des zylindrischen Bettes (11) angeordnet sind.

3. Meßroller nach Anspruch 1 oder 2, dadurch gekennzeichnet, daß die Kraftmeßeinrichtung mehrere parallel angeordnete optische Fasern (5a, 5b, 5c) aufweist, die um das zylindrische Bett (11) herum in Abstand zueinander und auf der Breite des Bettes (11) verteilt angeordnete Wicklungen (14, 15, 16, ...) mit wenigstens einer Windung (5′a, 5′b, 5′c) bilden.

4. Meßroller nach Anspruch 2, dadurch gekennzeichnet, daß die Lichtquelle (1) ein Laser ist.

5. Meßroller nach einem der Ansprüche 2 bis 4, dadurch gekennzeichnet, daß er einen Multiplexer (21) aufweist, der im Inneren des zylindrischen Bettes (11) angebracht ist und mit dem die Phasenfolgereinrichtungen (9a, 9b, 9c) verbunden sind.

6. Meßroller nach einem Ansprüche 2 bis 5, dadurch gekennzeichnet, daß er eine auf der Achse des Meßrollers in der Nähe des äußeren Endes eines Lagerzapfens (12, 12′) angeordnete Fotodiode (22) aufweist.

7. Meßroller nach einem der Ansprüche 2 bis 6, dadurch gekennzeichnet, daß er wenigstens einen Optokoppler (20) aufweist, mit dem mehrere optische Fasern (5a, 5b, 5c) verbunden sind.

8. Meßroller nach einem der Ansprüche 2 bis 7, dadurch gekennzeichnet, daß einer der Lagerzapfen (12) leitende Ringe (24, 25) aufweist, die mit der stabilisierten elektrischen Spannungsquelle (2) verbunden sind.

9. Meßroller nach einem der Ansprüche 1 bis 8, dadurch gekennzeichnet, daß der Mantelring (13) aus einem synthetischen Material, beispielsweise aus Kunstharz besteht.

10. Meßroller nach Anspruch 1 oder 3, dadurch gekennzeichnet, daß er in der Nähe der Wicklungen (14) der optischen Faser (5a) der Kraftmeßeinrichtung Sekundärwicklungen (24) aus temperaturempfindlichen optischen Fasern aufweist, die so angeordnet sind, daß sie den von dem Druck des Bandes auf den Mantelring (13) ausgeübten mechanischen Spannungen nicht ausgesetzt sind.

11. Meßroller nach Anspruch 10, dadurch gekennzeichnet, daß die Sekundärwicklungen (24) in Rillen untergebracht sind, die in unmittelbarer Nachbarschaft zu den Stellen der Hauptwicklungen (14) in das zylindrische Bett (11) eingearbeitet sind.

## Claims

1. A roller for measuring the surface flatness of a strip produced in a continuous process, for example a steel strip, said roller being rotatably mounted about its axis and of the kind which has a hollow cylindrical bed (11), a collar (13) and two hollow journals (12, 12′), characterised in that it comprises a fibre optic device for measuring force, by means of the birefringence occurring in a monomode optical fibre subjected to a lateral force, the optical fibre or optical fibres (5a) of the force-measuring device forming at least one winding (14) of at least one turn (5′a) around the cylindrical bed (11), which is placed in contact with the collar (13) such that it is subjected to the mechanical stress produced by the pressure of the strip on the collar.

2. A roller according to claim 1, characterised in that the fibre optic device for measuring force has a stabilised power supply (2), a monochromatic light source (1), a polariser (3) and at least a monomode optical fibre (5), a polarimetric analyser (7), a photodetector (8) and a phase-following electronic means (9) arranged inside the cylindrical bed (11).

3. A roller according to any one of claims 1 and 2, characterised in that the force-measuring device with which it is equipped has a plurality of optical fibres (5a, 5b, 5c) which are mounted in parallel and form spaced windings (14, 15, 16 ...) of at least one turn (5′a, 5′b, 5′c) around the cylindrical bed (11) and are distributed over the width of the bed (11).

4. A roller according to claim 2, characterised in that the light source (1) is a laser.

5. A roller according to any one of claims 2, 3 or 4, characterised in that it also has a multiplexer (21) which is arranged inside the cylindrical bed (11) and to which the phase-following means (9a, 9b, 9c) are connected.

6. A roller according to any one of claims 2 to 5, Characterised in that it has a photo diode (22) which is arranged in the roller shaft close to the outer face of a journal (12, 12′).

7. A roller according to any one of claims 2 to 6, characterised in that it has at least one optical coupler (20) to which a plurality of optical fibres (5a, 5b, 5c) are connected.

8. A roller according to any one of claims 2 to 7, characterised in that one of the journals (12), has conductive rings (24, 25) connected to the stabilised power supply (2).

9. A roller according to any one of claims 1 to 8, characterised in that the collar (13) is made of synthetic material, for example resin.

10. A roller according to any one of claims 1 and 3, characterised in that it has, in the vicinity of the windings (14) of the force-measuring optical fibre (5a), secondary windings (24) of optical fibres which are sensitive to temperature and arranged such that they are not subjected to mechanical stresses produced by the pressure of the strip on the collar (13).

11. A roller according to claim 10, characterised in that said secondary windings (24) are Positioned in grooves machined in the cylindrical bed (11) in the direct vicinity of where the main windings (14) are Positioned.
